# EUROPÄISCHE PATENTSCHRIFT

(11) **EP 0 750 377 B1**
(45) Veröffentlichungstag und Bekanntmachung des Hinweises auf die Patenterteilung: **24.01.2001**
(21) Anmeldenummer: 96810390.3
(22) Anmeldetag: 13.06.1996
(51) Int. Cl.: H02G 3/10

(54) **Montagekanal**
Mounting channel
Canalisation de montage

(30) Priorität: 23.06.1995 CH 184895
(43) Veröffentlichungstag der Anmeldung: 27.12.1996
(73) Patentinhaber: Drahtex AG, 8486 Rikon (CH)
(72) Erfinder: Eberle, Marcel, 8836 Bennau (CH); Frech, Fridolin Alois, 8488 Turbenthal (CH)
(74) Vertreter: Patentanwälte Breiter + Wiedmer AG

(56) Entgegenhaltungen:
- EP-A- 0 446 572
- DE-U- 9 406 088
- DE-U- 9 406 359

## Beschreibung

Die Erfindung bezieht sich auf einen Montagekanal mit entfernbaren Anschlusselementen in einem Verteilersystem für elektrische Kabel oder optische Fasern, insbesondere für die Fernmelde- und Datentechnik. Weiter betrifft die Erfindung einen Distanzhalter zum Verbinden von Montagekanälen.

Gattungsgemässe Montagekanäle mit U-förmig ausgebildetem Querschnitt für die Fernmelde- und Datentechnik sind nach dem relevanten Stand der Technik mit flach endenden Schenkeln, den Seitenwänden, versehen, welche Enden der Montage von Anschlusselementen, auch Anschlussleisten genannt, dienen. Zur Verkabelung bzw. zum Rangieren werden die Anschlusselemente entfernt, so werden diese nicht nur leichter zugänglich, auch der freie Zugang zum dahinterliegenden Montagekanal ist gewährleistet. Runde oder ovale Löcher in den Rück- und den Seitenwänden bekannter Kanäle erlauben die interne Befestigung von Installationskabeln und -drähten.

In der Regel werden nicht einzelne Montagekanäle, sondern mehrere parallel verlaufende eingesetzt. In Aussparungen der Kanalseitenwände werden Distanzhalter verschraubt, welche auch als Kabelträger dienen.

Die DE,U1 0406359 beschreibt einen Wandinstallationskanal mit einem einseitig offenen Gehäuseprofil für den Ein- und Ausbau elektrotechnischer Installationsgeräte und mit einem Klappdeckel an der offenen Seite. An einer Seitenwand ist ein zylinderförmiger Wulst mit Abflachungen ausgebildet, auf welchen mit wenigstens einer Andrückfeder eine Klaue des Klappdeckels gedrückt wird. So kann der Klappdeckel scharnierartig geöffnet werden. Die elektrotechnischen Installationsgeräte sind nicht schwenkbar.

In der CH,A5 641294 wird das Grundprinzip eines Anschlusselementes beschrieben, welches sich in den letzten Jahren nur wenig verändert hat. Ein isolierter Draht wird mit einem zwei Schenkel aufweisenden Anschlusselement aus einem blattförmigen, federnden Kontaktmaterial, welches einen Schlitz aufweist, elektrisch leitend verbunden. Dazu wird der isolierte Draht in eine erweiterte Einführöffnung gelegt und mit einem geeigneten Werkzeug in den Schlitz gedrückt. Dieser Schlitz ist von scharfen Kanten begrenzt und etwas enger als die Stärke der Metallseele des Drahtes, so dass beim Eindrücken der Isolationsmantel durchschnitten und eine Kontaktverbindung zwischen dem Draht und dem Anschlusselement hergestellt wird. Dadurch ergibt sich eine schnelle, leicht lösbare Verbindung, welche auch Schneid-Klemm-Kontakt genannt wird. Mit diesen Kontakten können isolierte Drähte, Kabel oder Fasern mit minimalem Aufwand angeschlossen, rangiert und entfernt werden, je nach Erfordernis und koordiniert mit der Verkabelung des entsprechenden Anschlusssteckers.

Weiterentwickelte Anschlusselemente für die Fernmelde- und Datentechnik sind in den EP,Al 0382322 und 0446572 beschrieben, welche auch mit Schneid-Klemm-Kontakten arbeiten. In der erstgenannten EP,A1 0382322 ist zum Anschluss abgeschirmter Kabel ein Schirmanschlusselement aus einem U-förmig gebogenen Blechteil vorgesehen. In der zweitgenannten EP,A1 0446572 ist ein Anschlusselement mit zwei Leistenkörpern offenbart, wobei wenigstens ein Leistenkörper mit einer Drehachse versehen ist. So ist der Leistenkörper aus der Anschlussleiste herausschwenkbar, wodurch der Montagekanal teilweise zugänglich wird.

Der vorliegenden Erfindung liegt die Aufgabe zugrunde, einen Montagekanal der eingangs genannten Art zu schaffen, welcher das Anschliessen, Rangieren und Entfernen von isolierten elektrischen Kabeln oder optischen Fasern auf Anschlusselementen erleichtert und insbesondere einen raschen, vollständigen Zugriff bei leichter Handhabung ohne Verwendung weiterer Hilfsmittel erlaubt. Weiter sollen Distanzhalter geschaffen werden, welche eine problemlose, zuggesicherte Zusammenstellung mehrerer Montagekanäle erlauben.

Bezüglich des M ntagekanals wird die Aufgabe erfindungsgemäss nach dem kennzeichen von Patentanspruch 1 gelöst. Spezielle und weiterbildende Ausführungsformen des erfindungsgemässen Montagekanals sind Gegenstand von abhängigen Ansprüche.

Als Anschlusselemente sind alle auf dem Markt erhältlichen Produkte, insbesondere auch die im einleitend genannten Stand der Technik beschriebenen, verwendbar, sofern sie Mittel zum Schwenken auf wenigstens einer längslaufenden Führung und bevorzugt zum Verschieben in Längsrichtung haben.

Vorzugsweise haben die Anschlusselemente zwei Paare von Federschenkeln, welche auf die längslaufenden Führungen des Montagekanals mit ihrer zylindermantelförmigen Oberfläche aufsteckbar sind. Innenseitig weisen die Federschenkelpaare eine dem Radius der Führungen entsprechende Abrundung auf. Beim Aufstecken, auch Aufclipen genannt, werden die Federschenkel leicht gespreizt und schnappen in der Endposition mit den Rundungen ein. Erfindungsgemäss werden die Federschenkel gleichzeitig als Mittel zum Schwenken verwendet. Das Anschlusselement kann wahlweise nach beiden Seiten geschwenkt werden, indem die eine oder die andere Clipverbindung gelöst wird, während die andere Clipverbindung immer noch die längslaufende Führung umfasst, welche eine Drehachse bildet.

Die längslaufenden Führungen des Montagekanals und die Federschenkel eines Anschlusselementes sind zweckmässig so ausgestaltet, dass dieses um wenigstens 90° nach der einen oder anderen Seite abgedreht werden kann. So wird der ganze Montagekanal sektorenweise oder vollständig freigelegt, je nach der Anzahl von ausgeschwenkten Anschlusselementen. Jedes einzelne abgedrehte Anschlusselement ist seinerseits leicht zugänglich.

Für die längslaufenden Führungen mit zylindermantelförmiger Oberfläche ergeben sich mehrere konstruktive Gestaltungsmöglichkeiten. Eine wesentliche Anforderung ist ein beidseitiges Ausschwenken der Anschlusselemente um wenigstens 90°. Wünschbar ist auch eine möglichst wenig beschränkte Verschiebbarkeit in Längsrichtung.

Nach einer ersten Variante wird auf dem die Längsöffnung im Montagekanal bildenden Oeffnungsrand ein Rundrohr oder ein Rundstab befestigt. Dies kann mit einer durchgehenden Schweissnaht oder mit einzelnen Schweisspunkten in einem Abstand von beispielsweise 10 bis 20 cm erfolgen. Nach einer besonders vorteilhaften Ausführungsform liegt der Rundstab oder das Rundrohr etwa tangential in der Ebene der angrenzenden Innenfläche des Montagekanals. Dadurch wird einerseits ein Schwenkbereich des Anschlusselementes von wenigstens 90° problemlos erreicht, andererseits bleibt die Längsöffnung im Montagekanal über ihre volle Breite erhalten.

Unabhängig von der Position des Rundstabes oder -rohrs kann diese längslaufende Führung nach einer zweiten Variante in Abstand vom Montagekanal durch Punktschweissen befestigt werden. Das Anschlusselement kann so beim Ausschwenken mit einem Federschenkel in den Zwischenraum von Rundstab oder Rundrohr und Montagekanal eintreten und so den Ausschwenkwinkel auf weit über 90° erhöhen. Dadurch wird der Zugriff zum Montagekanal besser, es müssen jedoch auch Nachteile inkauf genommen werden. Zum ersten ist das Anschlusselement nur in geschlossenem oder leicht geöffnetem Zustand längsverschiebbar, bei vollem Ausschwenken beschränkt sich die Längsverschiebbarkeit auf den Bereich zwischen zwei Schweisspunkten. Falls der Rundstab oder das Rundrohr nicht tangential zur Innenfläche des Montagekanals angeschweisst ist, wird die Zugänglichkeit dieses Kanals bezüglich der Breite beschränkt.

Im Bereich der Längsöffnung des Montagekanals können die Enden der Seitenwand nach einer dritten Variante so nach aussen abgebogen werden, dass eine rundrohrförmige Bördelung entsteht. Diese Lösung ist funktionsäquivalent zu einem entsprechend eingeschweissten Rundrohr gemäss der ersten Variante.

Im allgemeinen ist ein rundes Rohr gegenüber einem entsprechenden Stab bevorzugt, weil es bei praktisch gleicher mechanischer Festigkeit weniger Gewicht aufweist, was eine Kosteneinsparung und eine leichtere Handhabung bedeutet. Ueberdies können in rohrförmige, längslaufende Führungen Rollen mit Kabelreserve, Werkzeuge oder dgl. gesteckt werden.

Vorzugsweise weist die Rückwand und/oder wenigstens eine Seitenwand ausgestanzte Verhakungen zum einfachen Aufhängen von isolierten Drähten, Kabeln oder Fasern auf, wobei selbstverständlich auch Kabelbinder eingehängt werden können. Nach dem bekannten Stand der Technik weisen die Montagekanäle hinten und seitlich ovale Löcher für die Befestigung der Kanäle auf, welche Löcher auch für die interne Befestigung der Installationskabel und -drähte vorgesehen sind. Das notwendige Durchschlaufen ist mühsam und zeitaufwendig, im Gegensatz zu der erwähnten Weiterausbildung des erfindungsgemässen Montagekanals, welcher nur noch ein einfaches Einhängen erforderlich macht. Die Verhakungen sind beispielsweise T-, L-, pilz- oder hutförmig ausgebildet, wesentlich ist eine Verhinderung des Hinausgleitens.

An sich bekannte seitliche Aussparungen für die Befestigung von Distanzhaltern, welche auch als Kabelträger dienen, sind vorzugsweise in Form eines regelmässigen Vielecks mit je zwei paarweise parallelen Seiten ausgestanzt, zweckmässig als Quadrat, aber auch als Sechseck. Derartige Aussparungen sind zur Aufnahme eines Distanzhalters geeignet, welcher mit einem der nachfolgend beschriebenen Systeme festklemmbar ist.

Mit Bezug auf den Distanzhalter zum in der Praxis parallelen Verbinden von Montagekanälen wird die Aufgabe erfindungsgemäss dadurch gelöst, dass beide Stirnbereiche querschnittlich den Aussparungen in den Kanalseitenwänden entsprechen und wenigstens eine der Dicke dieser Wände entsprechende umlaufende Nut aufweisen, welche beim Drehen des Distanzhalters über die Mantelfläche des Nutenstegs eine Klemm- oder Schnappverbindung bildet.

Die Tiefe der Nut wird durch die Mantelfläche eines Nutenstegs bestimmt. Beim Einführen des Abstandhalters liegt dieser Nutensteg über den ganzen Umfang frei. Beim Drehen des Abstandhalters nähert sich die Mantelfläche des Nutenstegs immer mehr der Umrandung der Aussparung in der Kanalseitenwand und bildet schliesslich einen Schnapp- oder Klemmverschluss.

So können die Abstandshalter ohne Werkzeug und ohne komplizierte Verschraubungen rasch eingesetzt und wieder entfernt werden.

Die Vorteile der Erfindung können wie folgt kurz zusammengefasst werden:
- Der Montagekanal erlaubt ein Aufstecken von Anschlusselementen mit zwei Federschenkelpaaren, wobei wahlweise das eine oder andere Federschenkelpaar gleichzeitig als Drehachse zum Ausschwenken des Anschlusselementes verwendet werden kann. Dieses wird derart leicht zugänglich und lässt die ganze Oeffnung des Kanals frei.
- Reserven von Installationsdrähten, -kabeln und/oder Fasern können im Kanal einfach eingehängt werden, ein Durchschlaufen ist nicht mehr notwendig.
- Distanzhalter zwischen Montagekanälen, welche auch als Kabelträger dienen, können einfach montiert und demontiert werden, wobei eine mechanisch feste Klemmverbindung entsteht.

Der erfindungsgemässe Montagekanal wird anhand von in der Zeichnung dargestellten Ausführungsbeispielen, welche auch Gegenstand von abhängigen Ansprüchen sind, näher erläutert. Es zeigen schematisch:
- Fig. 1 einen Querschnitt durch einen Montagekanal mit aufgecliptem Anschlusselement,
- Fig. 2 einen Montagekanal gemäss Fig. 1 mit geöffnetem Anschlusselement,
- Fig. 3 eine Variante von Fig. 1, 2,
- Fig. 4 eine weitere Variante von Fig. 1, 2,
- Fig. 5 eine Ansicht eines Montagekanals von hinten,
- Fig. 6 eine Seitenansicht eines Montagekanals,
- Fig. 7 eine Ansicht eines Distanzhalters,
- Fig. 8 eine Draufsicht auf einen Distanzhalter gemäss Fig. 7,
- Fig. 9 ein Detail A gemäss Fig. 7,
- Fig. 10 eine aufgeschnittene Ansicht gemäss X-X in Fig. 7, und
- Fig. 11 eine Variante von Fig. 10.

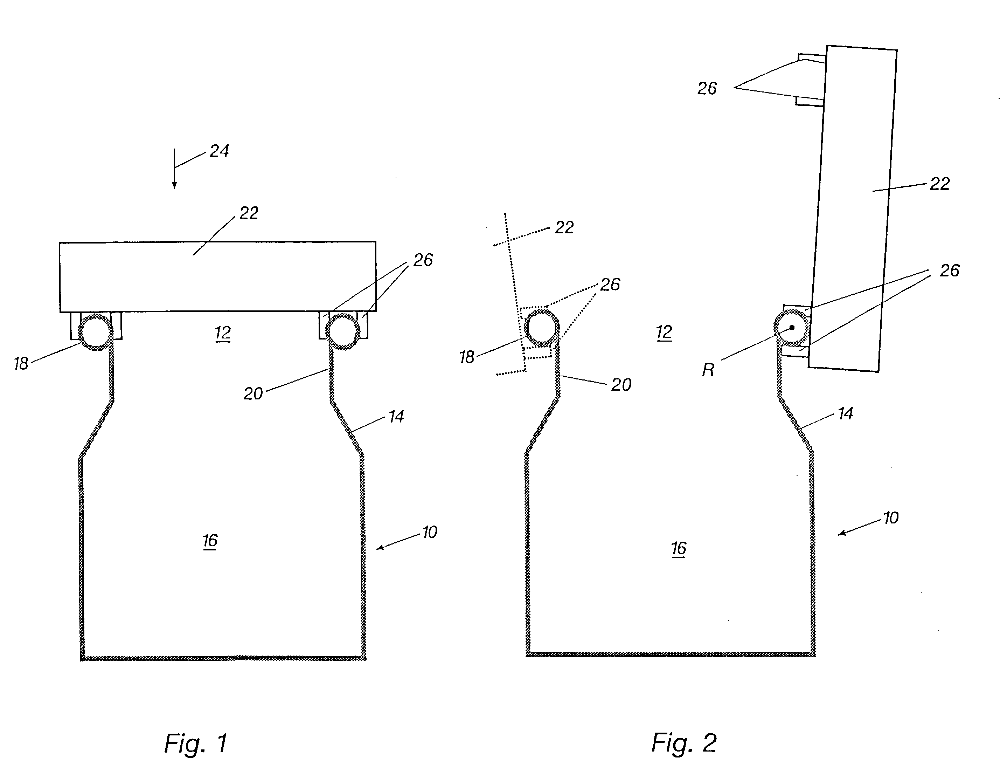

Fig. 1 zeigt einen Montagekanal 10, welcher im wesentlichen U-förmig ausgebildet ist und eine Längsöffnung 12 aufweist. Diese Längsöffnung 12 ist durch eine schräg abgewinkelte Stufe 14 gegenüber dem Innenraum 16 des Montagekanals etwas eingeengt. Entlang der Längsöffnung 12 sind zwei parallel längslaufende Führungen 18 mit zylindermantelförmiger Oberfläche, im vorliegenden Beispiel in Form von Rundrohren, angeschweisst. Die beiden Rundrohre liegen etwa tangential auf der Innenfläche 20 des Montagekanals 10 im Bereich der Längsöffnung 12.

Ohne die Ausbildung von Details ist ein Anschlusselement 22 gezeigt, welches in an sich bekannter Weise ausgebildet ist, beispielsweise gemäss der EP,A1 0382322 oder 0446572. Das Anschlusselement 22 umfasst vorzugsweise dem Fachmann bekannte Schneid-Klemm-Kontaktelemente für das Anschliessn, Rangieren oder Entfernen von isolierten, elektrisch leitenden Drähten, Kabeln oder optischen Fasern. In Richtung des Pfeils 24 kann ein ebenfalls an sich bekannter, nicht dargestellter Stecker aufgesetzt werden, auch unter Verwendung eines Codiersystems gemäss EP,A1 0573396.

Neu umfasst das Anschlusselement 22 zwei Federschenkelpaare 26, welche auf die längslaufenden Rohre 18 aufgeclipt sind. Zu diesem Zweck ist die dem Rohr 18 zugewandte Seite der Federschenkel 26 entsprechend abgerundet.

Fig. 2 zeigt das um wenig mehr als 90° geschwenkte Anschlusselement 22. Das in der Zeichnung linke Federschenkelpaar 26 ist ausgerastet, das Anschlusselement 22 kann nun unter Benutzung der Federschenkel 26 um die Achse R des Rohrs 18 schwenken.

Auf der linken Seite von Fig. 2 ist angedeutet, dass das Anschlusselement 22 auch rechts ausgeclipt und um das linke Rohr 18 geschwenkt werden könnte. Die beiden Lösungen sind im Prinzip gleichwertig. Die Verkabelung des Anschlusselementes 22 erfolgt jedoch so, dass sowohl die Eingangs- als auch die Ausgangsanschlüsse benachbart einer ausgewählten Drehachse R verlaufen.

Damit ist die Doppelfunktion der kreisrohrförmig ausgebildeten, längslaufenden Führungen 18 gut ersichtlich, sie dienen einerseits der Halterung des Anschlusselementes 22 und andererseits dessen Schwenken zur völligen Freigabe der Längsöffnung 12 des Montagekanals 10.

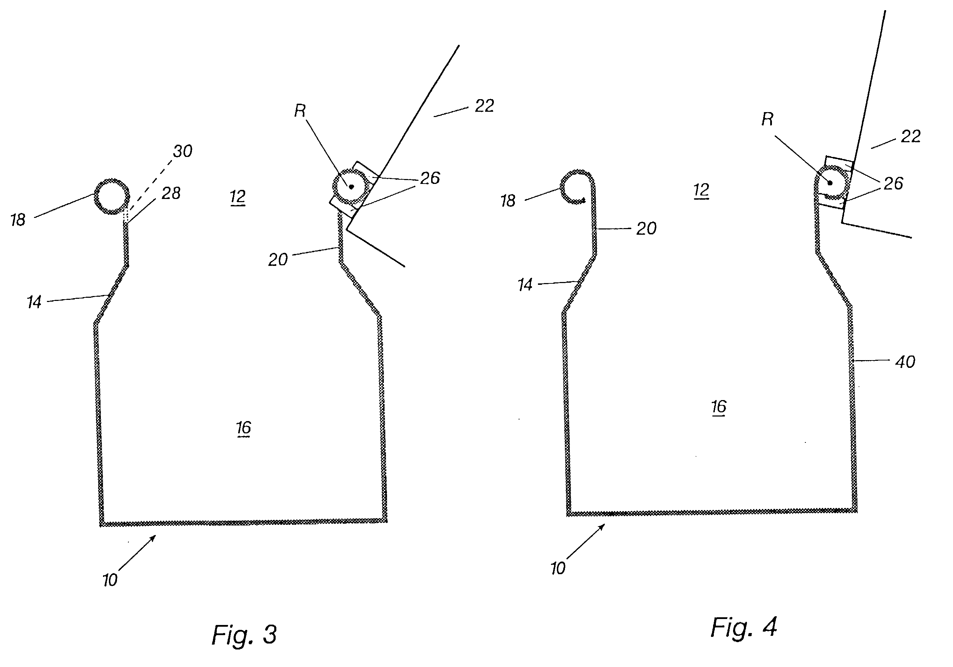

Nach Fig. 3 sind die rundrohrförmig ausgebildeten Führungen 18 in Abstand vom Oeffnungsrand 28 des Montagakanals 10 angeschweisst. Dies erfolgt über in einem Abstand von 10 bis 20 cm angeordnete Schweisspunkte, von welchen auf der linken Seite einer gestrichelt angedeutet ist, er liegt ausserhalb der Schnittebene. Auf der rechten Seite ist ein geöffnetes Anschlusselement 22 teilweise dargestellt. Es ist klar zu erkennen, wie ein Federschenkel 26 den Zwischenraum zwischen einem Oeffnungsrand 28 der Längsöffnung 12 und dem Rohr 18 durchgreift. Deshalb kann das Anschlusselement 22 weiter geöffnet werden, nämlich etwas über 120°. Nachteilig wirkt sich jedoch aus, dass das vollständig geöffnete Anschlusselement nur noch zwischen zwei Schweisspunkten 30 in Längsrichtung der Achse R verschoben werden kann. Für grössere Längsverschiebungen muss das Anschlusselement 22 wenigstens teilweise geschlossen werden.

In der Ausführungsform gemäss Fig. 4 ist anstelle eines angeschweissten Rundrohrs das Ende der Seitenwände 40 des Montagekanals 10 mit dem Oeffnungsrand 28 (Fig. 3) kreisförmig umgebogen und bildet so eine die längslaufende Führung 18 bildende Bördelung. Das Anschlusselement 22 kann um diese mit einem Rohr funktionsäquivalente Bördelung geschwenkt werden.

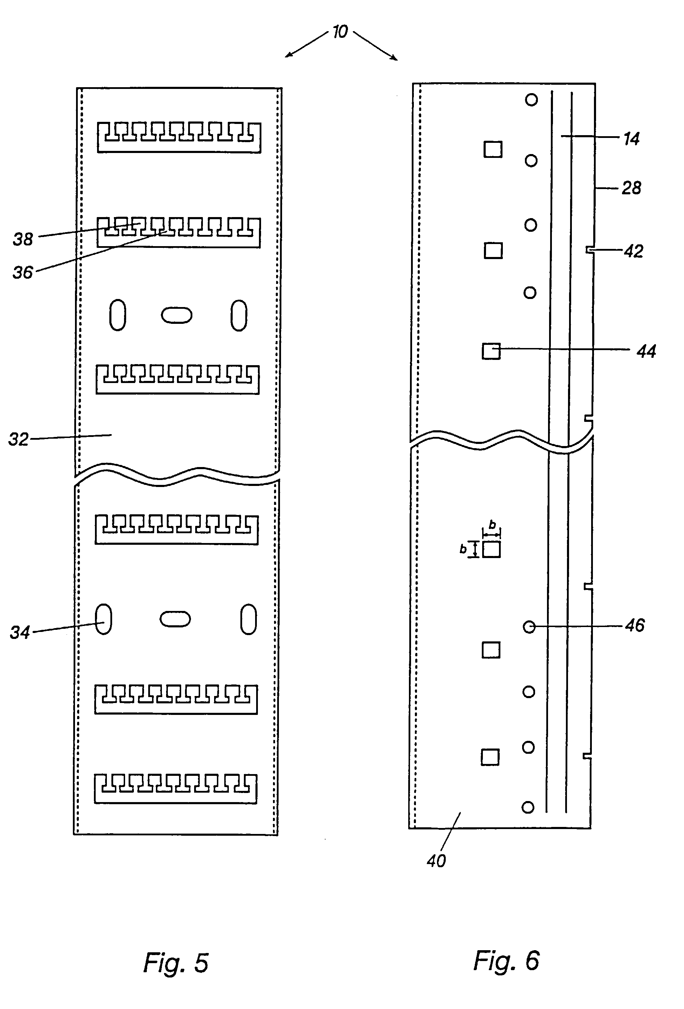

Eine in Fig. 5 dargestellte Rückwand 32 eines Montagekanals 10 zeigt neben den üblichen Ausstanzungen in Form von auch als oval bezeichneten Langlöchern 34 zeilenförmig ausgestanzte Verhakungen 36, im vorliegenden Fall T-förmig ausgebildet, was zu hinterschnittenen Räumen 38 führt. In diese können Kabelschlaufen oder dgl. eingelegt werden, ohne dass mühsam und zeitaufwendig mehrere den Langlöchern 34 entsprechende Oeffnungen durchschlauft werden müssen.

Eine in Fig. 6 dargestellte Seitenwand 40 eines Montagekanals 10 lässt die schräg abgewinkelte Stufe 14 erkennen. Am Oeffnungsrand 28 sind in regelmässigen Abständen Einkerbungen 42 ausgespart, sie dienen dem Punktschweissen zur Befestigung einer längslaufenden Führung 18 (Fig. 1 bis 4). Ueber die ganze Länge der Seitenwand 40 erstrecken sich quadratförmige Aussparungen 44 einer Seitenlänge b, welche der Verankerung von Distanzhaltern dienen.

In den stirnseitigen Bereichen der Seitenwand 40 sind je vier Löcher 46 für Einpressmuttern vorgesehen. Selbstverständlich können analog zur Rückwand 32 (Fig. 5) auch Verhakungen 36 ausgestanzt sein.

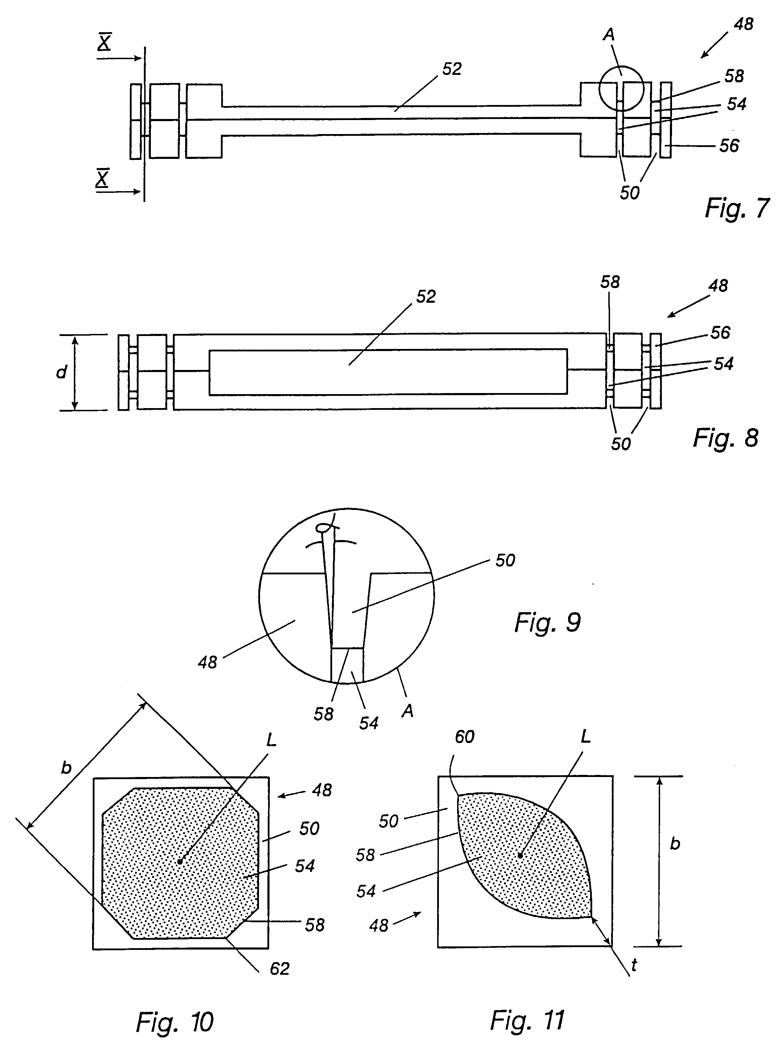

Ein in Fig. 7 bis 9 dargestellter Distanzhalter 48 ist, von der Seite betrachtet, ein hochgestelltes Quadrat mit vertikaler und horizontaler Diagonale einer Länge d. Die stirnseitigen Bereiche umfassen je zwei umlaufende Nuten 50 und einen langen, verhältnismässig schmalen Mittelsteg 52. Die Aussenwände der Nuten 50 verlaufen nicht parallel, sondern sind gegen aussen leicht geöffnet, was in Fig. 9 mit einem Winkel α von etwa 5° dargestellt ist. Dies erleichtert nach dem Einführen eines Distanzhalters 48 in eine quadratische Aussparung 44 (Fig. 6) der Kanalseitenwand 40 das Verankern. Ein Nutensteg 54 mit einem umlaufenden Nutenmantel 58, dem Nutenboden, ist das Mittel zum Bilden der Klemm- oder Schnappverbindung.

Liegen die Seitenwände zweier benachbarter Montagekanäle 10 im Bereich der vorgesehenen Nuten 50, so wird der Distanzhalter 48 gedreht, bis er verklemmt oder einschnappt. Die Dicke der im vorliegenden Beispiel metallischen Seitenwand 40 (Fig. 6) entspricht der Breite der Nuten 50 des aus Kunststoff bestehenden Distanzhalters 48.

Das Einschnappen kann dank der quadratischen Form der Aussparung 44 (Fig. 6) und der achteckigen Gestaltung der Nutenstege 54 erfolgen. Die Mantelfläche 58 des Nutenstegs 54 weist im Schnitt gemäss Fig. 10 je zwei parallele längere Seitenpaare und je zwei kürzere Seitenpaare auf. Die in den Eckbereichen des Quadrats in einem Winkel von 45° angeordneten kürzeren Seitenpaare haben einen Abstand b, entsprechend der Seitenlänge der quadratischen Aussparung 44 (Fig. 6). Alle Kanten 62 des achteckigen Nutenstegs 54 sind abgerundet, ihr Scheitelpunkt muss wenig weiter, z.B. 0,5 - lmm, von dessen Längsmittelachse L entfernt liegen als die halbe Seitenlänge b der quadratischen Aussparung 44 (Fig.6).

Nach dem Einführen eines Stirnplättchens 56 in eine quadratische Aussparung 44 (Fig. 6) und dem Drehen des Distanzhalters 48 nähern sich zwei diagonal gegenüberliegende Kanten 62 des Nutenstegs 54 immer mehr der Umrandung der quadratischen Aussparung 44. Beim Aufliegen wird der Distanzhalter 48 mit erhöhter Kraftanwendung weitergedreht, bis eines der diagonal gegenüberliegenden, parallelen Seitenpaare vollflächig aufliegt, was man Einschnappen nennt. Der Distanzhalter 48 ist zugsicher und vibrationsfest fixiert.

Das selbsthemmende Verklemmen gemäss Fig. 11 kann dank der ebenfalls quadratischen Form der Aussparung 44 (Fig. 6) und der in Diagonalrichtung länglichen Form der Nutenstege 54 erfolgen. Nach dem Einführen eines Stirnplättchens 56 und dem Drehen des Distanzhalters 48 nähert sich die Mantelfläche 58 des Nutensteges 54 immer mehr der quadratischen Umrandung der Aussparung 44 bis sie an zwei diagonal gegenüberliegenden Stellen aufliegt. Dazu muss jedoch wenigstens der diagonale Scheitelpunkt 60 weiter vom Mittelpunkt des Quadrates entfernt sein als dessen halbe Seitenlänge b. Mit andern Worten darf die Tiefe t der Nut 50 in Diagonalrichtung nicht grösser sein als die halbe Diagonale d, vermindert um die halbe Seitenlänge b des Quadrates. Diese Variante beinhaltet die Gefahr, dass sich die Klemmverbindung durch äussere Einwirkungen, z.B. Vibrationen, lössen kann.

Die Nuten 50 eines Distanzhalters 48 sind an beiden stirnseitigen Enden paarweise ausgebildet, weil so die Distanz zwischen den Montagekanälen variiert werden kann.

## Patentansprüche

1. Montagekanal (10) mit entfernbaren Anschlusselementen (22) in einem Verteilersystem für elektrische Kabel oder optische Fasern, insbesondere für die Fernmelde- und Datentechnik,
dadurch gekennzeichnet, dass
der querschnittlich im wesentlichen U-förmig ausgebildete Montagekanal (10) beidseits der Längsöffnung (12) längslaufende Führungen (18) mit zylindermantelförmiger Oberfläche aufweist, welche im Bereich der Längsöffnung (12) etwa tangential der Innenfläche (20) des Kanals (10) anliegen und die Längsöffnung (12) vollflächig freilassen, und dass die Anschlusselemente (22) selbsttätig auf den Führungen (18) gehaltert und schwenkbar sind.

2. Montagekanal (10) nach Anspruch 1, dadurch gekennzeichnet, dass die Seitenwände (40) in Richtung der Längsöffnung (12) eingeengt sind, vorzugsweise durch je eine schräg abgewinkelte Stufe (14).

3. Montagekanal (10) nach Anspruch 1 oder 2, dadurch gekennzeichnet, dass die längslaufenden Führungen (18) Rundrohre oder Rundstäbe sind, welche vorzugsweise mit dem Kanal (10) verschweisst sind.

4. Montagekanal (10) nach Anspruch 3, dadurch gekennzeichnet, dass die Rundrohre oder Rundstäbe (18) über eine durchgehende Schweissnaht mit dem Kanal verbunden sind.

5. Montagekanal (10) nach Anspruch 3, dadurch gekennzeichnet, dass die Rundrohre oder Rundstäbe (18) mit einigen Schweisspunkten (30) am oder in Abstand vom Oeffnungsrand (28) des Kanals (10) verlaufen.

6. Montagekanal (10) nach Anspruch 1 oder 2, dadurch gekennzeichnet, dass das Ende der Seitenwände (40) zylindermantelförmig nach aussen umgebördelt ist.

7. Montagekanal (10) nach einem der Ansprüche 1 bis 6, dadurch gekennzeichnet, dass die Rückwand (32) und/oder wenigstens eine Seitenwand (40) ausgestanzte Verhakungen (36) hat, welche vorzugsweise T-, L-, pilz- oder hutförmig ausgebildet sind.

8. Montagekanal (10) nach wenigstens einem der Ansprüche 1 bis 7, dadurch gekennzeichnet, dass die Anschlusselemente (22) über zwei Federschenkelpaare (26) auf die längslaufenden Führungen (18) aufgeclipt sind.

9. Montagekanal (10) nach wenigstens einem der Ansprüche 1 bis 8, dadurch gekennzeichnet, dass die Seitenwände (40) quadratische oder hexagonale Aussparungen (44) für Distanzhalter (48) mit einem Dreh-Klemm-Verschluss aufweisen.

10. Distanzhalter (48) zum parallelen Verbinden von Montagekanälen (10) nach Anspruch 9, dadurch gekennzeichnet, dass beide Stirnbereiche querschnittlich den Aussparungen (44) in den Kanalseitenwänden (40) entsprechen und wenigstens eine der Dicke der dieser Wände entsprechende umlaufende Nut (50) aufweisen, welche beim Drehen des Distanzhalters über die Mantelfläche (58) des Nutenstegs (54) eine Klemm- oder Schnappverbindung bildet.

## Claims

1. Installation duct (10) with removable connection elements (22) in a distribution system for electrical cables or optical fibres, in particular for telecommunications and data technology,
characterised in that
the installation duct (10) is substantially U-shaped in cross-section and has longitudinal guides (18) on both sides of the slot (12), the longitudinal guides (18) having a cylinder casing-shaped surface and in the area of the slot (12) lie approximately tangential to the inner surface (20) of the duct (10) leaving the slot (12) open over its entire area, and in that the connection elements (22) are automatically held on the guides (18), and are swivellable.

2. Installation duct (10) according to claim 1, characterised in that the side walls (40) are narrowed in the direction of the slot (12), preferably each by an obliquely angled step (14).

3. Installation duct (10) according to claim 1 or 2, characterised in that the longitudinal guides (18) are round tubes or rods which are preferably welded to the duct (10).

4. Installation duct (10) according to claim 3, characterised in that the round tubes or rods (18) are connected to the duct by way of a through weld seam.

5. Installation duct (10) according to claim 3, characterised in that the round tubes or rods (18) with some weld points (30) run on, or at a distance from, the opening edge (28) of the duct (10).

6. Installation duct (10) according to claim 1 or 2, characterised in that the ends of the side walls (40) are rolled outwards into a cylinder casing shape.

7. Installation duct (10) according to any of claims 1 to 6, characterised in that the back wall (32) and/or at least one side wall (40) has punched out notches (36) which are preferably T-, L-, mushroom- or cap-shaped.

8. Installation duct (10) according to at least one of claims 1 to 7, characterised in that the connection elements (22) are clipped to the longitudinal guides (18) by two pairs of sprung legs (26).

9. Installation duct (10) according to at least one of claims 1 to 8, characterised in that the side walls (40) have square or hexagonal recesses (44) for spacers (48) with a twist clip closure.

10. Spacers (48) for parallel connection of installation ducts (10) according to claim 9, characterised by two face areas corresponding in cross-section to the recesses (44) in the duct side walls (40), the spacers having at least one peripheral groove (50) corresponding to the thickness of the walls, where on rotation of the spacer over the generated surface (58) of the groove web (54) the groove forms a clamp or snap closure.

## Revendications

1. Canal de montage (10) à éléments détachables de raccordement (22) dans un système de distribution pour câbles électriques ou fibres optiques, en particulier pour les techniques de transmission et de données, caractérisé en ce que le canal de montage (10) configuré sensiblement en forme de U en vue en coupe transversale comporte, sur les deux côtés de l'ouverture longitudinale (12), des guidages (18) de tracé longitudinal à surface en forme d'enveloppe cylindrique, qui reposent à peu près tangentiellement à la surface intérieure (20) du canal (10) dans la zone de l'ouverture longitudinale (12) et libèrent l'ouverture longitudinale (12) sur toute sa surface, et en ce que les éléments de raccordement (22) sont supportés automatiquement et peuvent pivoter sur les guidages (18).

2. Canal de montage (10) selon la revendication 1, caractérisé en ce que les parois latérales (40) sont rétrécies en direction de l'ouverture longitudinale (12), de préférence chacune par un gradin (14) incliné en oblique.

3. Canal de montage (10) selon la revendication 1 ou 2, caractérisé en ce que les guidages (18) de tracé longitudinal sont des tubes ronds ou des barres rondes, qui sont de préférence soudés sur le canal (10) .

4. Canal de montage (10) selon la revendication 3, caractérisé en ce que les tubes ronds ou les barres rondes (18) sont connectés au canal au moyen d'un cordon de soudure continu.

5. Canal de montage (10) selon la revendication 3, caractérisé en ce que les tubes ronds ou les barres rondes (18) sont agencés adjacents au bord (28) d'ouverture du canal (10), ou à distance de ce bord, au moyen de quelques points de soudure (30).

6. Canal de montage (10) selon la revendication 1 ou 2, caractérisé en ce que l'extrémité des parois latérales (40) est rabattue vers l'extérieur en forme d'enveloppe cylindrique.

7. Canal de montage (10) selon l'une quelconque des revendications 1 à 6, caractérisé en ce que la paroi arrière (32) et/ou au moins l'une des parois latérales (40) comporte des accrochages (36) estampés, de préférence à configuration de T, de L, de champignons ou de chapeaux.

8. Canal de montage (10) selon l'une au moins des revendications 1 à 7, caractérisé en ce que les éléments de raccordement (22) sont montés par encliquetage sur les guidages (18) de tracé longitudinal au moyen de deux paires (26) de branches élastiques.

9. Canal de montage (10) selon l'une au moins des revendications 1 à 8, caractérisé en ce que les parois latérales (40) comportent des évidements carrés ou hexagonaux (44) pour des entretoises (48) à fermeture à borne tournante.

10. Entretoise (48) destinée à une connexion parallèle de canaux de montage (10) selon la revendication 9, caractérisée en ce que les deux zones frontales correspondent en vue en coupe transversale aux évidements (44) ménagés dans les parois latérales (40) du canal et comportent au moins une rainure périphérique (50) qui correspond à l'épaisseur de ces parois et qui forme, lors d'une rotation de l'entretoise, une connexion à borne ou à encliquetage au moyen de la surface d'enveloppe (58) de la barrette (54) de rainure.
